# EUROPÄISCHE PATENTSCHRIFT

(11) **EP 2 275 729 B1**
(45) Veröffentlichungstag und Bekanntmachung des Hinweises auf die Patenterteilung: **21.03.2018**
(21) Anmeldenummer: 10006668.7
(22) Anmeldetag: 28.06.2010
(51) Int. Cl.: F16K 31/08, F16K 31/06, F16K 11/16

(54) **Ventil**
Valve
Soupape

(30) Priorität: 16.07.2009 DE 102009033585
(43) Veröffentlichungstag der Anmeldung: 19.01.2011
(73) Patentinhaber: FESTO AG & Co. KG, 73734 Esslingen (DE)
(72) Erfinder: Munz, Gebhard, 73614 Schorndorf (DE); Gaßmann, Andreas, 71384 Weinstadt (DE); Giousouf, Metin, 73732 Esslingen (DE); Zanker, Michael Stefan, 73733 Esslingen (DE); Blassmann, Lars, 73732 Esslingen (DE)
(74) Vertreter: Patentanwälte Magenbauer & Kollegen Partnerschaft mbB

(56) Entgegenhaltungen:
- EP-A1- 1 030 091
- WO-A1-2006/125259
- WO-A1-2008/011886
- US-A- 3 203 447

## Beschreibung

Die Erfindung betrifft ein Ventil, mit zwei in einem Ventilgehäuse relativ zu diesem und relativ zueinander zwischen jeweils einer Schließstellung und mindestens einer Offenstellung bewegbar angeordneten ersten und zweiten Steuerelementen, von denen das erste Steuerelement mit einem einem ersten Ventilsitz zugeordneten ersten Verschlussmittel und das zweite Steuerelement mit einem einem zweiten Venilsitz zugeordneten zweiten Verschlussmittel bewegungsgekoppelt ist, wobei jedes Verschlussmittel in der Schließstellung des mit ihm bewegungsgekoppelten Steuerelementes dichtend am zugeordneten Ventilsitz anliegt und in der Offenstellung davon abgehoben ist, und mit elektrisch aktivierbaren Antriebsmitteln zum Betätigen der Steuerelemente, wobei die Antriebsmittel von mindestens einer die wahlweise Betätigung jedes Steuerelementes ermöglichenden elektrodynamischen Antriebseinrichtung gebildet sind, die zwei miteinander kooperierende und relativ zueinander bewegliche erste und zweite Antriebseinheiten in Form einer Permanentmagneteinheit und einer elektrisch bestrombaren Spuleneinheit enthält, wobei die erste Antriebseinheit ortsfest bezüglich dem Ventilgehäuse angeordnet und die zweite Antriebseinheit Bestandteil eines relativ zum Ventilgehäuse beweglichen Mitnehmers ist.

Ein Ventil in Form eines Piezoventils ist aus der EP 1 207 329 B1 bekannt. Das bekannte Ventil enthält zwei von Biegewandlern gebildete Steuerelemente, die an einem Ende fest miteinander verbunden und am Ventilgehäuse gelagert sind. Die entgegengesetzten Endabschnitte der Biegewandler sind als Verschlussmittel ausgebildet, die jeweils über einen Ventilsitz hinwegragen, um je nach Betätigungszustand einen dem Ventilsitz zugeordneten Ventilkanal freizugeben oder zu verschließen. Durch die starre Verbindung der Biegewandler in dem Lagerbereich lässt sich eine Vergrößerung des Stellweges und der Stellkraft erzielen. Problematisch ist allerdings die sehr aufwändige und kostenintensive Herstellung der Biegewandler, welche in einer einstückigen Biegewandlereinheit zusammengefasst sind. Außerdem sind sehr hohe Ansteuerspannungen erforderlich und die Lebensdauer kann durch Rissbildung in der Piezokeramik beeinträchtigt werden.

Aus der WO 2006/125259 A1 ist ein Ventil der eingangs genannten Art bekannt, das zwei jeweils mit einem Verschlussmittel und einem Permanentmagnet ausgestattete Steuerelemente aufweist. Die Permanentmagnete stoßen sich ab, so dass in einer Grundstellung beide Verschlussmittel an einen Ventilsitz angedrückt werden. Durch Bestromung einer Spule wird in Abhängigkeit von der Stromflussrichtung erreicht, dass entweder das eine oder das andere Verschlussmittel vom zugeordneten Ventilsitz abgehoben wird, während das nicht abgehobene Verschlussmittel gleichzeitig an den zugeordneten Ventilsitz angedrückt wird.

Aus der EP 0 916 049 B1 ist ein Magnetventil bekannt, bei dem ein einziges lamellenförmiges Steuerelement mit einem Permanentmagnet bestückt ist, der mit einem Elektromagnet kooperiert. Durch den Permanentmagnet wird das Steuerelement im Zusammenwirken mit zwei Weicheisenteilen alternativ in jeweils einer von zwei Schaltstellungen festgehalten. Durch impulsartiges Betätigen des Elektromagneten kann das Steuerelement zwischen seinen beiden Schaltstellungen umgeschaltet werden.

Aus der DE 103 54 231 A1 ist ein Ventil bekannt, bei dem zwei federnd vorgespannte Schließkörper mittels eines drehbaren Ankers einer Elektromagneteinrichtung abwechselnd betätigbar sind.

Die DE 10 2006 023 652 A1 beschreibt eine Einrichtung zur Betätigung von zwei federnd vorgespannten Ventilgliedern in einem Verbrennungsmotor, die einen verschwenkbaren Doppelhebel aufweist, der abwechselnd auf die beiden Ventilglieder einwirken kann.

In der erst nach dem Prioritätsdatum der vorliegenden Patentanmeldung veröffentlichten WO 2009/097868 A1 werden zwei Steuerelemente eines Ventils durch eine elektrodynamische Antriebseinrichtung betätigt, die eine an dem einen Steuerelement angeordnete Permanentmagneteinheit und eine am anderen Steuerelement angeordnete Spuleneinheit aufweist.

Es ist die Aufgabe der vorliegenden Erfindung, ein zur Steuerung zweier Ventilkanäle geeignetes Ventil zu schaffen, das bei einfacher und kostengünstiger Herstellung eine lange Lebensdauer verspricht.

Zur Lösung dieser Aufgabe ist erfindungsgemäß vorgesehen, dass der Mitnehmer ausgehend von einer bei unbestromter Spuleneinheit vorliegenden Grundstellung je nach gewählter Richtung der Bestromung der Spuleneinheit zu wahlweise einer von zwei einander entgegengesetzt orientierten ersten und zweiten Arbeitsbewegungen antreibbar ist, bei deren Ausführung er bei gleichzeitiger antriebsmäßiger Entkopplung vom jeweils anderen Steuerelement auf entweder das erste oder das zweite Steuerelement einwirkt, um dessen Schaltstellung zu verändern.

Somit genügt prinzipiell eine einzige elektrodynamische Antriebseinrichtung, um entweder das eine oder das andere Steuerelement zu betätigen und in einer gewünschten Schaltstellung zu positionieren. Die Antriebseinrichtung ist den beiden Steuerelementen funktionell gemeinsam zugeordnet, wobei eine ihrer Antriebseinheiten, also entweder die Permanentmagneteinheit oder die Spuleneinheit, ortsfest bezüglich des Ventilgehäuses angeordnet ist und die relative Beweglichkeit zwischen den beiden Antriebseinheiten nur durch die Bewegung der bezüglich dem Ventilgehäuse nicht ortsfesten Antriebseinheit realisiert wird, die als Bestandteil eines relativ zum Ventilgehäuse beweglichen Mitnehmers ausgebildet ist. Durch Bestromung der Spuleneinheit kann somit der Mitnehmer abhängig von der Bestromungsrichtung zu einer ersten Arbeitsbewegung oder zu einer diesbezüglich entgegengesetzt orientierten zweiten Arbeitsbewegung angetrieben werden, wobei er entweder nur auf das eine oder nur auf das andere Steuerelement eine dieses umschaltende Antriebskraft ausübt, während er vom jeweils anderen Steuerelement antriebsmäßig entkoppelt ist, so dass dieses seine momentane Schaltstellung beibehalten kann. Somit liegt eine äußerst kompakte Anordnung vor, die wenig verschleißanfällig ist und nur geringe Ansteuerspannungen erfordert. Die Herstellung lässt sich verhältnismäßig kostengünstig bewerkstelligen. Außerdem wird das Betriebsverhalten des Ventils durch Schwankungen in der Umgebungstemperatur und durch Feuchtigkeitseinflüsse kaum beeinträchtigt.

Zweckmäßigerweise besteht die Möglichkeit, durch Veränderung der Stromstärke bei der elektrischen Ansteuerung der Spuleneinheit das Maß der im Rahmen der jeweiligen Arbeitsbewegung erzielbaren Auslenkung des Mitnehmers und mithin auch der Steuerelemente zwischen Maximalwerten zu variieren, insbesondere stufenlos. Auf diese Weise kann insbesondere die Möglichkeit geschaffen werden, ein und dasselbe Steuerelement in verschiedenen Offenstellungen zu positionieren, in denen das ihm zugeordnete Verschlussmittel unterschiedlich weit von dem ihm gegenüberliegenden Ventilsitz abgehoben ist und es folglich einen unterschiedlich großen Strömungsquerschnitt freigeben kann. Dies ermöglicht einen besonders vorteilhaften Betrieb des Ventils als Proportionalventil.

Zweckmäßigerweise ist die Permanentmagneteinheit konstruktiv so ausgelegt, dass sich an einer bevorzugten Stelle die höchste Flussdichte des Magneten einstellt. Zweckmäßigerweise in diesem Bereich liegt die Spuleneinheit, wenn der Mitnehmer die Grundstellung einnimmt. Zur Fixierung in der Grundstellung kann der Mitnehmer über beispielsweise ein elastisches Gelenk oder sonstige nachgiebige Aufhängungsmittel bezüglich dem Ventilgehäuse fixiert sein.

Vorteilhafte Weiterbildungen der Erfindung gehen aus den Unteransprüchen hervor.

Besonders kompakte Abmessungen sind realisierbar, wenn die beiden Antriebseinheiten so ausgebildet sind, dass sie in Abhängigkeit von ihrer Relativposition mehr oder weniger weit ineinander eintauchen. Hierbei kommt insbesondere ein Tauchspulenprinzip zur Anwendung, bei dem die Spuleneinheit mehr oder weniger weit in die Permanentmagneteinheit eintaucht, insbesondere in koaxialer Anordnung.

Zur Vorgabe der Bestromungsrichtung der Spuleneinheit ist zweckmäßigerweise eine geeignete Steuereinrichtung vorhanden. Mit ihr lässt sich vorzugsweise auch die Dauer der Bestromung und folglich die Dauer der Einhaltung der jeweils gewünschten Ventilstellung kontrollieren. Ist die Steuereinrichtung auch zur variablen Vorgabe der Bestomungsintensität ausgebildet, lässt sich nicht nur ein rein digitales Schaltverhalten der Steuerelemente realisieren, sondern bei Bedarf eine proportionale Betriebsweise, bei der die Auslenkung der Steuerelemente proportional zur Stromstärke regulierbar ist.

Da die Masse einer Spuleneinheit in der Regel kleiner ist als diejenige einer Permanentmagneteinheit, ist es zur Minimierung der zu bewegenden Massen vorteilhaft, die Permanentmagneteinheit ortsfest am Ventilgehäuse anzuordnen und die Spuleneinheit als Bestandteil des Mitnehmers auszuführen.

Bei einer zweckmäßigen Ausgestaltung der Ventileinheit sind die Verschlussmittel und die Ventilsitze so angeordnet, dass beide Steuerelemente ihre Schließstellung einnehmen, wenn der Mitnehmer aufgrund unbestromter Spuleneinheit seine Grundstellung einnimmt. Die Schließstellung der Steuerelemente wird insbesondere durch Federmittel in nachgiebiger Weise vorgegeben, so dass der Mitnehmer die zugeordnete Federkraft überwinden muss, um ein Steuerelement in eine Offenstellung auszulenken. Das momentan vom Mitnehmer nicht beeinflusste Steuerelement verbleibt dann in durch die Federmittel vorgespannter Weise in der Schließstellung. Die Federmittel sind zweckmäßigerweise mechanischer Art und können platzsparend von mindestens einer Blattfeder gebildet sein oder auch durch eine interne Federelastizität der Steuerelemente selbst realisiert sein.

Die Ventilsitze umschließen zweckmäßigerweise jeweils einen in eine Ventilkammer des Ventils einmündenden eigenen Ventilkanal, von denen der eine zweckmäßigerweise ein der Zufuhr eines Druckmediums dienender Speisekanal und der andere ein zur Druckentlastung dienender, bei pneumatischen Anwendungen als Entlüftungskanal fungierender Abführkanal ist. Zusätzlich zu diesen beiden steuerbaren Ventilkanälen mündet zweckmäßigerweise noch mindestens ein weiterer, dritter Ventilkanal in die Ventilkammer ein, der ständig offen ist und dessen Strömungsquerschnitt durch die Steuerelemente nicht beeinflussbar ist. Bei ihm handelt es sich zweckmäßigerweise um einen mit einem anzusteuernden Verbraucher verbindbaren Arbeitskanal. Somit kann beispielsweise ein 3/3-Wegeventil realisiert werden, insbesondere in einer Ausgestaltung als Proportionalventil. Die Verschlussmittel sind zweckmäßigerweise unmittelbar am jeweils zugeordneten Steuerelement angeordnet. Es kann sich bei ihnen um aus Material mit abdichtenden Eigenschaften bestehende Dichtungselemente handeln, die angeklebt oder auf sonstige Weise fixiert sind. Es ist aber auch möglich, die Steuerelemente so auszubilden, dass sie unmittelbar selbst die Verschlussmittel definieren.

Die Antriebsverbindung zwischen dem Mitnehmer und jedem Steuerelement ist zweckmäßigerweise eine nur lose Verbindung, wobei der Mitnehmer zur Übertragung einer ein Steuerelement auslenkenden Stellkraft ohne feste Verbindung in insbesondere drückender Weise auf das betreffende Steuerelement einwirkt. Abweichend hiervon wäre prinzipiell auch eine Bauform denkbar, bei der nur eine ziehende Kraft ausgeübt werden kann. Konstruktiv einfacher lässt sich jedoch eine zur ausschließlichen Übertragung von drückenden Kräften geeignete antriebsmäßige Kopplung verwirklichen.

Um solche Drückkräfte übertragen zu können, verfügt der Mitnehmer zweckmäßigerweise über je mindestens eine erste und zweite Drückfläche, der jeweils eine am jeweils zugeordneten Steuerelement angeordnete erste bzw. zweite Betätigungsfläche gegenüberliegt. Je nach Bewegungsrichtung wirkt dann der Mitnehmer mit der einen Drückfläche auf die eine Betätigungsfläche ein, während sich gleichzeitig seine andere Drückfläche von der Betätigungsfläche des anderen, in der Ausgangsstellung verharrenden Steuerelementes entfernt.

Die Auslegung der einzelnen Komponenten ist insbesondere so getroffen, dass in der Grundstellung des Mitnehmers zwischen mindestens einer und unsbesondere jeder Drückfläche und der dieser gegenüberliegenden Betätigungsfläche ein kleiner Luftspalt vorliegt, so dass Überbestimmungen vermieden werden und eine zuverlässige gleichzeitige Einnahme der Schließstellung durch beide Steuerelemente gewährleistet werden kann.

Je nach Ausgestaltung und Lagerung des Mitnehmers können sich die beiden Drückflächen an einander entgegengesetzten Seiten oder an ein und derselben Seite des Mitnehmers befinden. Die erstgenannte Variante wird insbesondere dann gewählt, wenn der Mitnehmer zwischen die beiden Betätigungsflächen ragt und insbesondere auf einander entgegengesetzten Seiten von den beiden Steuerelementen flankiert wird. Die an zweiter Stelle genannte Variante kommt insbesondere dann zum Einsatz, wenn die beiden Betätigungsflächen und insbesondere auch beide Steuerelemente auf der gleichen Seite des Mitnehmers platziert sind und der Mitnehmer wippenartig ausgebildet ist, wobei seine Drückflächen beidseits seines Schwenklagers platziert sind.

Beide Steuerelemente sind zweckmäßigerweise derart ausgebildet, dass ihre Steuerbewegung eine Schwenkbewegung ist. Insbesondere wenn die zu steuernden Ventilsitze untereinander identisch ausgerichtet sind, ist es empfehlenswert, eines der Steuerelemente zur Realisierung einer Richtungsumkehr der Bewegung des Verschlussmittels wippenartig auszubilden.

Insbesondere in Verbindung mit einem wippenartig ausgebildeten Mitnehmer ist es zur Vermeidung unerwünschter Schwingungen zweckmäßig, jedem Mitnehmerarm eine eigene elektrodynamische Antriebseinrichtung zuzuordnen, so dass auf einfache Weise ein Massenausgleich realisierbar ist.

Es sei auch noch auf die Möglichkeit verwiesen, im Bereich jeder Antriebseinrichtung ein sogenanntes Ferrofluid zu platzieren. Hierbei handelt es sich um eine Flüssigkeit, die auf ein magnetisches Feld reagiert. Sie befindet sich dort, wo ansonsten ein Luftspalt um die Spuleneinheit herum angeordnet wäre und wird durch das Feld der Permanentmagneteinheit gehalten. Das Ferrofluid bewirkt unter anderem eine Kühlung der Spuleneinheit sowie eine Dämpfung der sich bewegenden Komponenten.

Nachfolgend wird die Erfindung anhand der beiliegenden Zeichnung näher erläutert. In dieser zeigen:
- Figur 1: eine bevorzugte erste Bauform des erfindungsgemäßen Ventils in einer schematischen Schnittdarstellung, wobei der Mitnehmer in der Grundstellung und die beiden Steuerelemente in jeweils ihrer Schließstellung gezeigt sind,
- Figur 2: einen schematischen Längsschnitt durch ein weiteres Ausführungsbeispiel des erfindungsgemäßen Ventils, wobei wiederum der Mitnehmer bei Einnahme der deaktivierten Grundstellung und beide Steuerelemente bei Einnahme ihrer Schließstellung gezeigt sind,
- Figur 3: funktionell relevante Komponenten des Ventils aus Figur 2 in der Offenstellung des einen Steuerelementes,
- Figur 4: das Ventil aus Figur 2 in einer mit Figur 3 übereinstimmenden Darstellungsweise, jedoch bei Einnahme der Offenstellung durch das andere Steuerelement, und
- Figur 5: einen schematischen Längsschnitt durch eine weitere Ausführungsform des Ventils, wobei wie in Figuren 3 und 4 das Ventilgehäuse nicht gezeigt ist und wobei der Mitnehmer die Grundstellung und die beiden Steuerelemente jeweils ihre Schließstellung einnehmen.

Die nachfolgende Beschreibung bezieht sich, sofern im Einzelfall keine andere Aussage getroffen wird, einheitlich auf alle Ausführungsbeispiel.

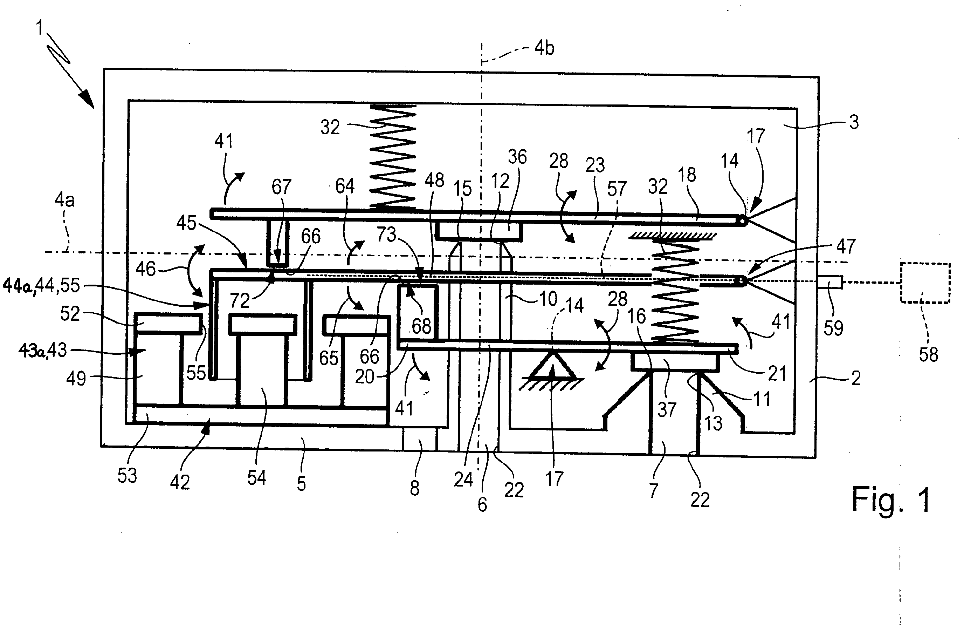

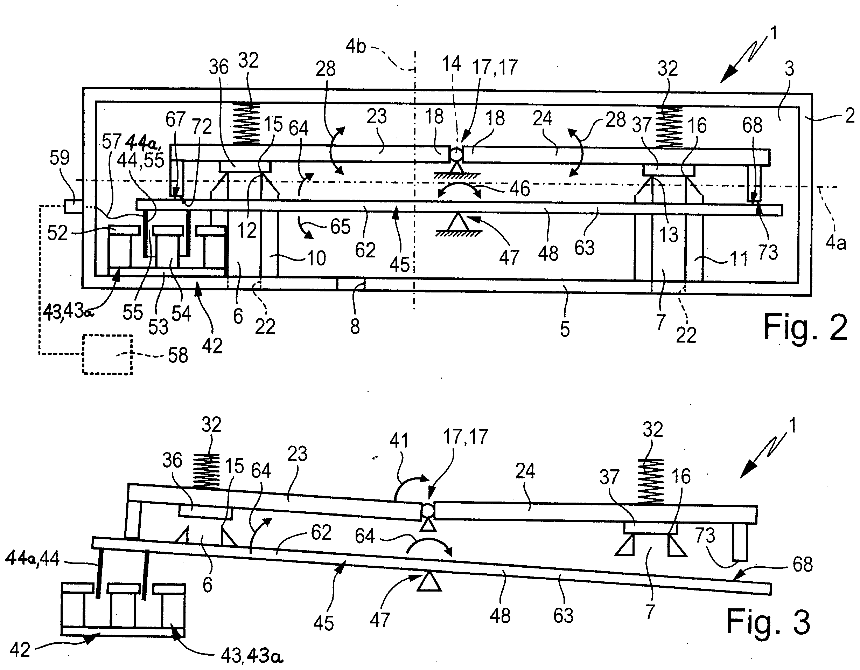

Das insgesamt mit Bezugsziffer 1 bezeichnete Ventil enthält ein nur in Figuren 1 und 2 abgebildetes Ventilgehäuse 2, das eine Ventilkammer 3 umgrenzt. In dieser Ventilkammer 3 sind die funktionellen Komponenten des Ventils 1 untergebracht.

Das Ventilgehäuse 2 besitzt eine strichpunktiert angedeutete Hauptachse 4a und eine dazu rechtwinkelige Querachse 4b. Die abgebildeten Schnitte verlaufen in einer durch die Hauptachse 4a und die Querachse 4b aufgespannten Ebene.

Eine erste Wandung 5 des Ventilgehäuses 2, die beim Ausführungsbeispiels den Boden der Ventilkammer 3 definiert, ist von einem ersten und zweiten Ventilkanal 6, 7 durchsetzt. Der erste Ventilkanal 6 mündet mit einer ersten Kanalmündung 12 in die Ventilkammer 3 ein, ebenso der zweite Ventilkanal 7 mit einer zweiten Kanalmündung 13. Die erste Kanalmündung 12 ist von einem ersten Ventilsitz 15 umrahmt, die zweite Kanalmündung 13 von einem zweiten Ventilsitz 16. Vorzugsweise befinden sich die Ventilsitze 15, 16 jeweils an der freien Stirnseite einer an der ersten Wandung 5 angeordneten und in die Ventilkammer 3 hineinragenden Erhebung 10, 11. Diese kann zum zugeordneten Ventilsitz 15, 16 hin insbesondere konisch verjüngt ausgebildet sein.

Mit ihren der ersten und zweiten Kanalmündung 12, 13 entgegengesetzten äußeren Kanalmündungen 22 sind die beiden Ventilkanäle 6, 7 zur Außenfläche der ersten Wandung 5 hin offen. Dort können vom Ventil 1 wegführende Fluidleitungen angeschlossen werden, die nicht weiter abgebildet sind.

Der erste Ventilkanal 6 ist insbesondere ein Speisekanal und kann mit einer externen Druckquelle verbunden werden, die ein fluidisches Druckmedium liefert, insbesondere Druckluft. Der zweite Ventilkanal 7 ist zweckmäßigerweise ein mit einer Drucksenke, beispielsweise mit der Atmosphäre oder mit einem Tank verbindbarer Abführkanal. Die Funktionalität der beiden Ventilkanäle 6, 7 kann auch vertauscht sein.

Die beiden Kanalmündungen 12, 13 mit ihren zugeordneten Ventilsitzen 15, 16 sind in Achsrichtung der Hauptachse 4a zweckmäßigerweise beabstandet zueinander angeordnet. Bevorzugt liegen sie allerdings gemeinsam in der von der Hauptachse 4a und der Querachse 4b aufgespannten oder einer hierzu parallelen Ebene. Untereinander sind die Ventilsitze 15, 16 bevorzugt identisch ausgerichtet, sie weisen in Achsrichtung der Querachse 4b und hierbei insbesondere von der ersten Wandung 5 weg. Ein Querversatz der Ventilsitze 15, 16 rechtwinkelig zu der vorgenannten Ebene wäre prinzipiell ebenfalls möglich.

An einer anderen Stelle mündet ein dritter Ventilkanal 8 ebenfalls in die Ventilkammer 3 ein. Auch er durchsetzt zweckmäßigerweise die erste Wandung 5. Bei ihm handelt es sich insbesondere um einen mit einem zu betätigenden Verbraucher verbindbaren Arbeitskanal.

In der Ventilkammer 3 befinden sich ein erstes Steuerelement 23 und ein bezüglich dem ersten Steuerelement 23 insbesondere gesondert ausgebildetes zweites Steuerelement 24. Jedenfalls sind die beiden Steuerelemente 23, 24 unabhängig voneinander relativ zueinander und relativ zum Ventilgehäuse 2 bewegbar. Obgleich prinzipiell auch andere Gestaltungsformen möglich wären, hat sich für die beiden Steuerelemente 23, 24 eine lamellenförmige Formgebung als besonders zweckmäßig erwiesen. Es handelt sich also zweckmäßigerweise um längliche, bevorzugt streifenförmig gestaltete Bauteile, deren Längsachsen bei Einnahme einer Ausgangsstellung parallel zueinander verlaufen, wie dies aus Figuren 1 und 2 ersichtlich ist. Ihre Längsachsen erstrecken sich dabei insbesondere parallel zu der Hauptachse 4a, ihre Hauptausdehnungsebenen verlaufen rechtwinkelig zu der von der Hauptachse 4a, der Querachse 4b aufgespannten, im Folgenden als "Bezugsebene" bezeichneten Ebene.

Bei dem Ausführungsbeispiel der Figur 1 sind die beiden Steuerelemente 23, 24 mit Abstand längsseits nebeneinander angeordnet. Sie erstrecken sich in der Ausgangsstellung mit in Achsrichtung der Querachse 4b gemessenem Abstand nebeneinander.

Bei den Ausführungsbeispielen der Figuren 2 bis 5 sind die beiden Steuerelemente 23, 24 in ihrer Längsrichtung aufeinanderfolgend angeordnet, wobei ihre mit der Hauptachse 4a gleichgerichteten Längsachsen bevorzugt koaxial ausgerichtet sind. Die rechtwinkelig zu der Bezugsebene ausgerichteten Haupterstreckungsebenen beider Steuerelemente 23, 24 fallen in der Ausgangsstellung zweckmäßigerweise zusammen.

Das erste Steuerelement 23 erstreckt sich über den ersten Ventilsitz 15 hinweg. In gleicher Weise erstreckt sich das zweite Steuerelement 24 über den zweiten Ventilsitz 16 hinweg.

Beide Steuerelemente 23, 24 sind bezüglich dem Ventilgehäuse 2 verschwenkbar. Die Schwenkebene verläuft parallel zu der Bezugsebene, die jeweils zugeordnete Schwenkachse 14 verläuft rechtwinkelig zu der Bezugsebene. Die mögliche Schwenkbewegung ist in Figuren 1, 2 und 5 bei 28 durch einen Doppelpfeil verdeutlicht.

Die Schwenkbeweglichkeit der Steuerelemente 23, 24 wird jeweils durch ein zwischen dem Steuerelement 23, 24 und dem Ventilgehäuse 2 angeordnetes Schwenklager 17 ermöglicht. Beim Ausführungsbeispiel der Figur 1 befindet sich das dem ersten Steuerelement 23 zugeordnete Schwenklager 17 an einem ersten Endbereich 18 des ersten Steuerelements 23. Auf diese Weise wird das gesamte erste Steuerelement 23 bei der Schwenkbewegung 28 in wahlweise die eine oder andere Richtung verschwenkt.

Vergleichbare Zustände gelten bei den Ausführungsbeispielen der Figuren 2 bis 5 für jedes der beiden Steuerelemente 23, 24. Hier ist sowohl das erste Steuerelement 23 als auch das zweite Steuerelement 24 an jeweils einem ersten Endbereich 18 über ein Schwenklager 17 relativ zum Ventilgehäuse 2 schwenkbeweglich aufgehängt. Vorteilhaft ist es hierbei, wenn die beiden Steuerelemente 23, 24 mit einander zugewandten ersten Endbereichen 18 installiert sind, so dass die zugeordneten Schwenklager 17 örtlich konzentriert in dem zwischen den beiden Steuerelementen 23, 24 liegenden Bereich angeordnet werden können und insbesondere die Möglichkeit besteht, beide Schwenklager 17 als Baueinheit auszubilden. Auch in diesem Fall ist die Lagergestaltung jedoch so getroffen, dass die beiden Steuerelemente 23, 24 ohne gegenseitige Beeinflussung unabhängig voneinander gemäß Doppelpfeil 28 verschwenkbar sind.

Mindestens ein Schwenklager 17 kann beispielsweise als elastisches Federgelenk ausgebildet sein, vorzugsweise bestehend aus einem federelastisch biegbaren Materialabschnitt. Ebenso besteht jedoch die Möglichkeit, die Schwenklager 17 ohne stoffschlüssigen Materialverbund einfach durch relativ zueinander bewegliche gesonderte Komponenten auszubilden, beispielsweise mittels einer Lagerwelle oder mittels einer Schneidenlagerung, bei der der erste Endbereich 18 durch Federmittel an eine Lagerungsschneide angedrückt wird.

Während also bei den Ventilen der Figuren 1 bis 5 die beiden Steuerelemente 23, 24 insbesondere über den gleichen prinzipiellen Aufbau und die gleiche prinzipielle Lagerungsmaßnahme verfügen, ist bei dem Ausführungsbeispiel der Figur 1 das zweite Steuerelement 24 wippenartig ausgebildet. Das zweite Steuerelement 24 ist insgesamt starr, wobei sich sein Schwenklager 17 an einer zu beiden Endbereich beabstandeten Stelle befindet, derart, dass das zweite Steuerelement 24 durch das Schwenklager 17 in einen ersten und zweiten Wippenarm 20, 21 unterteilt wird. Die Schwenkbewegung gemäß Doppelpfeil 28 äußert sich hier in einem Verkippen des gesamten zweiten Steuerelementes 24 um das ihm zugeordnete Schwenklager 17.

Abgesehen von den geschilderten Lagerungsarten könnten die Steuerelemente 23, 24 auch auf andere Weise bezüglich dem Ventilgehäuse 2 gelagert werden, um die gewünschte Schwenkbeweglichkeit 28 zu erreichen.

Bei allen Ausführungsformen ist das erste Steuerelement 23 in dem dem ersten Ventilsitz 15 gegenüberliegenden Bereich mit einem ersten Verschlussmittel 36 versehen. In gleicher Weise verfügt das zweite Steuerelement 24 in dem dem zweiten Ventilsitz 16 gegenüberliegenden Bereich über ein zweites Verschlussmittel 37. Die Verschlussmittel 36, 37 bestehen beispielhaft aus jeweils einem aus Material mit gummielastischen Eigenschaften gebildeten Plättchen, das an das zugeordnete Steuerelement 23, 24 angeklebt oder dort auf andere Weise befestigt ist. Es kann sich aber auch um eine Beschichtung des Steuerelementes 23, 24 handeln. Im einfachsten Fall wird das Verschlussmittel 36, 37 unmittelbar von dem Steuerelement 23, 24 gebildet.

Im unbetätigten Zustand nimmt jedes Steuerelement 23, 24 eine aus Figuren 1, 2 und 5 ersichtliche Ausgangsstellung ein, die bei allen Ausführungsbeispielen eine Schließstellung ist, in der das zugeordnete Verschlussmittel 36, 37 unter Abdichtung an dem ihm zugewandten Ventilsitz 15, 16 anliegt. Die Schließstellung wird zweckmäßigerweise durch Federmittel 32 vorgegeben, insbesondere bestehend aus mindestens einer Blattfederanordnung oder einer Schraubenfederanordnung, die zwischen dem Ventilgehäuse 2 und dem zugeordneten ersten oder zweiten Steuerelement 23, 24 wirksam ist. Erfolgt die Schwenklagerung eines Steuerelementes 23, 24 mittels eines federelastischen Gelenkes, kann auch dieses zur Realisierung der Federmittel herangezogen werden, so dass auf zusätzliche separate Federmittel verzichtet werden könnte.

Ausgehend von der Ausgangsstellung, vorliegend also der Schließstellung, kann jedes Steuerelement 23, 24 nur in einer im Folgenden als Öffnungsrichtung 41 bezeichneten Richtung verschwenkt werden. Eine Bewegung in entgegengesetzter Richtung ist durch den zugeordneten, als Anschlagmittel fungierenden Ventilsitz 15, 16 verhindert.

Durch Verschwenken in der Öffnungsrichtung 41, wobei die Rückstellkraft der Federmittel 32 zu überwinden ist, kann jedes Steuerelement 23, 24 in eine Offenstellung bewegt werden, in der das an ihm angeordnete Verschlussmittel 36 oder 37 vom gegenüberliegenden Ventilsitz 15 oder 16 mehr oder weniger weit abgehoben ist. Es liegt dann eine fluidische Verbindung zwischen dem offenen Ventilkanal 6 oder 7 und der Ventilkammer 3 vor, wobei die Ventilkammer 3 ihrerseits mit dem dritten Ventilkanal 8 fluidisch verbunden ist.

Je nachdem, wie weit ein Steuerelement 23, 24 aus der Schließstellung ausgelenkt wird, ergeben sich Offenstellungen mit unterschiedlich großen freigegebenen Strömungsquerschnitten, da der freigegebene Strömungsquerschnitt davon abhängt, wie weit ein Verschlussmittel 36, 37 vom zugeordneten Ventilsitz 15, 16 abgehoben ist.

Wenn im Betrieb des Ventils 1 beide Steuerelemente 23, 24 zur gleichen Zeit die Schließstellung einnehmen, ist der dritte Ventilkanal 8 (Arbeitskanal) von sowohl dem ersten als auch dem zweiten Ventilkanal 6, 7 abgetrennt und das ihm zuvor eventuell zugeführte Fluidvolumen ist eingesperrt. Bei in einer Offenstellung befindlichem ersten Steuerelement 23 und gleichzeitig in Schließstellung befindlichem zweiten Steuerelement 24 ist der dritte Ventilkanal 8 vom zweiten Ventilkanal 7 abgesperrt und zur Speisung mit Fluid mit dem ersten Ventilkanal 6 verbunden. Nimmt das zweite Steuerelement 24 eine Offenstellung ein und befindet sich gleichzeitig das erste Steuerelement 23 in der Schließstellung, liegt eine Verbindung zwischen dem dritten Ventilkanal 8 und dem zweiten Ventilkanal 7 vor, so dass der dritte Ventilkanal 8 (Arbeitskanal) druckmäßig entlastet bzw. entlüftet wird.

Das Ventil 1 lässt sich zur Steuerung jedes beliebigen Fluides einsetzen, wird aber bevorzugt zur Steuerung von Druckluft genutzt.

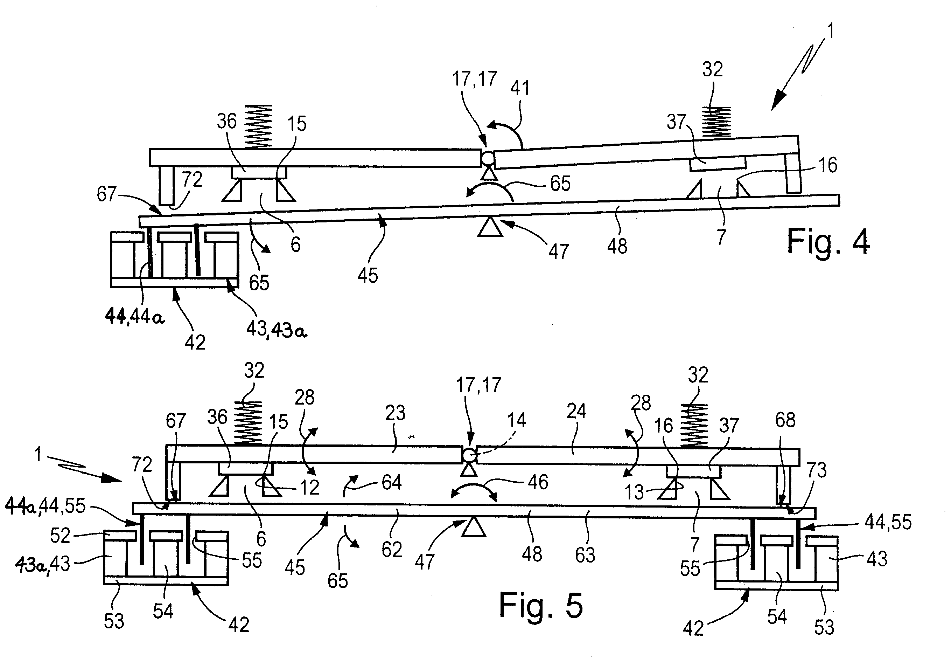

Zur Betätigung der Steuerelemente 23, 24 ist das Ventil 1 mit elektrisch aktivierbaren Antriebsmitteln in Gestalt mindestens einer elektrodynamischen Antriebseinrichtung 42 ausgestattet. Das Ventil gemäß Figuren 1 bis 4 verfügt über genau eine solche elektrodynamische Antriebseinrichtung 42, das Ventil gemäß Figur 5 ist mit zwei Stück davon ausgestattet.

Jede Antriebseinrichtung 42 ist in der Lage, sowohl das erste Steuerelement 23 als auch das zweite Steuerelement 24 zu betätigen, also eine wahlweise Betätigung jedes Steuerelementes 23, 24 vorzunehmen. Die Antriebseinrichtung 42 ist ein elektrodynamisches Magnet-Spule-System, wie es unter anderem häufig auch in Lautsprechern zur Anwendung gelangt.

Genauer gesagt ist die Antriebseinrichtung 42 dahingehend aufgebaut, dass sie zwei miteinander in Wechselwirkung stehende erste und zweite Antriebseinheiten 43, 44 aufweist, von denen beim Ausführungsbeispiel die erste Antriebseinheit 43 als Permanentmagneteinheit 43a und die zweite Antriebseinheit 44 als elektrisch bestrombare Spuleneinheit 44a ausgebildet ist. Eine vertauschte Ausbildung wäre jedoch ebenfalls möglich.

Die beiden Antriebseinheiten 43, 44 sind in an sich bekannter Weise relativ zueinander beweglich, wobei die Antriebskraft durch einen elektrischen Strom verursacht wird, mit dem die Spuleneinheit 44a gespeist wird und der ein mit dem Magnetfeld der Permanentmagneteinheit 43a in Wechselwirkung tretendes Magnetfeld erzeugt. Je nach Bestromungsrichtung ergibt sich eine anziehende oder abstoßende Wirkung der genannten Magnetfelder, aus der eine Relativbewegung zwischen den beiden Antriebseinheiten 43, 44 resultiert.

Die vorgenannte Relativbewegung äußert sich bei den beschriebenen Ventilen 1 allerdings lediglich in einer Bewegung der zweiten Antriebseinheit 44. Während die erste Antriebseinheit 43 ortsfest bezüglich dem Ventilgehäuse 2 angeordnet ist - sie ist beispielsweise an der Innenseite des Ventilgehäuses 2 und dabei vorzugsweise an der ersten Wandung 5 befestigt - bildet die zweite Antriebseinheit 44 einen Bestandteil eines insgesamt mit Bezugsziffer 45 bezeichneten Mitnehmers, der relativ zum Ventilgehäuse 2 und folglich auch relativ zu der ersten Antriebseinheit 43 bewegbar ist.

Der Mitnehmer 45 ist insbesondere so ausgebildet, dass er relativ zum Ventilgehäuse 2 verschwenkbar ist. Seine mögliche Schwenkbewegung ist bei 46 durch einen Doppelpfeil angedeutet. Gewährleistet wird die Schwenkbeweglichkeit durch ein Schwenklager 47, das in gleicher Weise ausgebildet werden kann wie die verschiedenen weiter oben anhand des Schwenklagers 17 der Steuerelemente 23, 24 erläuterten Ausführungsformen. Die durch das Schwenklager 47 definierte Schwenkachse verläuft parallel zu den Schwenkachsen 14 der Steuerelemente 23, 24.

Die beiden Antriebseinheiten 43, 44 sind so angeordnet, dass sie sich in der Richtung der Schwenkbewegung 46 gegenüberliegen. Dabei tauchen sie je nach Aktivierungszustand der Spuleneinheit 44a mehr oder weniger weit ineinander ein. Der Aufbau entspricht insbesondere einem sogenannten Tauchspulenprinzip, wobei die Spuleneinheit 44 mehr oder weniger weit in die Permanentmagneteinheit 43 eintauchen kann.

Allen Ausführungsbeispielen ist gemeinsam, dass der Mitnehmer 45 einen bevorzugt starren, die zweite Antriebseinheit 44 tragenden Mitnehmerarm 48 aufweist. Beim Ausführungsbeispiel der Figur 1 ist der Mitnehmerarm 48 zwischen den beiden Steuerelementen 23, 24 angeordnet, wobei sein einer Endbereich mit dem Schwenklager 47 kooperiert und sein anderer Endbereich mit der zweiten Antriebseinheit 44 versehen ist. Bei dieser Anordnung ist das Schwenklager 47 insbesondere als Federgelenk ausgebildet.

Bei den Ausführungsbeispielen der Figuren 2 bis 5 befindet sich der wie beim Ausführungsbeispiel der Figur 1 linear ausgebildete Mitnehmerarm 48 zwischen einerseits den beiden Steuerelementen 23, 24 und andererseits der ersten Wandung 5. Beide Steuerelemente 23, 24 liegen also auf der gleichen Seite längsseitig neben dem Mitnehmerarm 48. Das Schwenklager 47 ist zu beiden Endbereichen des Mitnehmerarmes 48 beabstandet angeordnet, so dass sich eine insgesamt wippenartige Ausbildung des Mitnehmers 45 ergibt. Ausgehend von dem Schwenklager 47 erstrecken sich in einander entgegengesetzte Richtungen ein erster und ein zweiter Armabschnitt 62, 63 des Mitnehmerarmes 48, von denen zumindest der erste Armabschnitt 62 in einem zu dem Schwenklager 47 beabstandeten Bereich die zweite Antriebseinheit 44 trägt. Bevorzugt ist die zweite Antriebseinheit 44 an einem Endbereich des ersten Armabschnittes 62 angeordnet.

Bei dem mit nur einer Antriebsrichtung 42 ausgestatteten Ventil der Figuren 2 bis 4 trägt der zweite Armabschnitt 63 keine Antriebseinheit. Bei einer Ausstattung mit zwei Antriebseinrichtungen 42 kann gemäß Figur 5 beiden Armabschnitten 62, 63 je eine der Antriebseinrichtungen 42 zugeordnet sein, so dass hier jeder Armabschnitt 62, 63 eine zweite Antriebseinheit 44 trägt.

Zur gesteuerten Bestromung der Spuleneinheit 44a kann das Ventil 1 mit einer gestrichelt angedeuteten elektrischen oder elektronischen Steuereinrichtung 58 ausgestattet oder verbindbar sein. Von der Spuleneinheit 44a gehen lediglich in Figuren 1 und 2 angedeutete elektrische Leiter 57 ab, die aus dem Ventilgehäuse 2 herausgeführt sind und zu außen am Ventilgehäuse 2 angeordneten Anschlussmitteln 59 führen, an die die Steuereinrichtung 58 angeschlossen werden kann. Die elektrischen Leiter 57 können zumindest partiell flexibel sein, um die Bewegung der Spuleneinheit 44 nicht zu behindern. Sie können auch über den Mitnehmerarm 48 und das diesem zugeordnete Schwenklager 47 hinweg geführt sein.

Über die Steuereinrichtung 58 kann die Spuleneinheit 44a in zwei einander entgegengesetzten Richtungen bestromt werden. Der Stromfluss ist also in seiner Richtung umkehrbar. Damit lässt sich die Kraftwirkung zwischen beiden Antriebseinheiten 43, 44 variieren. Bei der einen Bestromungsrichtung ziehen sich die beiden Antriebseinheiten 43, 44 an, bei der anderen Bestromungsrichtung stoßen sie sich ab. Auf diese Weise kann der Mitnehmer 45 ausgehend von einer bei unbestromter Spuleneinheit 44a eingenommenen Grundstellung zu wahlweise einer ersten Arbeitsbewegung 64 oder einer dieser entgegengesetzten zweiten Arbeitsbewegung 65 angetrieben werden. Bei diesen Arbeitsbewegungen 64, 65 handelt es sich beim Ausführungsbeispiel um die entweder in der einen Richtung oder der anderen Richtung ausgeführte Schwenkbewegung 46.

Das Antriebsprinzip der elektrodynamischen Antriebseinrichtung 42 basiert darauf, dass der in der Spuleneinheit 44a rechtwinkelig zum magnetischen Feld der Permanentmagneteinheit 43a fließende Strom eine zur Stromrichtung und zur Feldlinienrichtung rechtwinkelige Antriebskraft hervorruft, deren Richtung von der Stromflussrichtung abhängt. Somit kann durch Wechseln der Stromflussrichtung die Richtung der Antriebskraft umgekehrt werden, um entweder die erste Arbeitsbewegung 64 oder die zweite Arbeitsbewegung 65 zu erzeugen.

Durch die Steuereinrichtung 58 kann zweckmäßigerweise auch die Stromstärke variabel vorgegeben werden. Auf diese Weise lässt sich die Wegstrecke bzw. der Hub der beiden Arbeitsbewegungen 64, 65 variabel vorgeben. Der Hub ist verantwortlich für die jeweils eingenommene Offenstellung der Steuerelemente 23, 24 und folglich für den in der Offenstellung freigegebenen Strömungsquerschnitt.

Bei elektrisch nicht aktivierter elektrodynamischer Antriebseinrichtung 42, wenn also weder elektrodynamische Anziehungskräfte noch elektrodynamische Abstoßungskräfte wirken, nimmt der Mitnehmer 45 die aus Figuren 1, 2 und 5 ersichtliche Grundstellung ein. Die Spuleneinheit 44a befindet sich hierbei zweckmäßigerweise im Bereich der höchsten Flussdichte der Permanentmagneteinheit 43a. Bevorzugt ist die Grundstellung unter der Mitwirkung von Federmitteln vorgegeben, die den Mitnehmer 45 in nachgiebiger Weise fixieren. Derartige Federmittel können separat vorhanden und/oder in das zugeordnete Schwenklager 47 integriert sein.

Die Grundstellung des Mitnehmers 45 kann auch allein durch die beiden Steuerelemente 43, 44 definiert werden, zwischen die er wirkungsmäßig zwischengeschaltet ist. Da die beiden Steuerelemente 23, 24 durch Federmittel 32 in ihre Schließstellung vorgespannt sind, kann der Mitnehmer 45 derart dazwischen eingegliedert werden, dass er sich in der Richtung der ersten Arbeitsbewegung 64 am ersten Steuerelement 23 und in der Richtung der zweiten Arbeitsbewegung 65 am zweiten Steuerelement 24 abstützt.

Die vorgenannte Abstützung ist zweckmäßigerweise jedoch spielbehaftet, so dass ein Luftspalt 66 zwischen einem oder beiden die Schließstellung einnehmenden Steuerelementen 23, 24 und dem sich in der Grundstellung befindenden Mitnehmer 45 vorliegt. Auf diese Weise kann eine zuverlässige gleichzeitige Schließstellung beider Steuerelemente 23, 24 auf einfache Weise gewährleistet werden.

Der Mitnehmer 45 überträgt die von der Antriebsvorrichtung 42 erzeugte Antriebskraft auf wahlweise das erste oder zweite Steuerelement 23, 24. Hierbei liegt eine Besonderheit darin, dass der Mitnehmer 45 bei der Ausführung der ersten Arbeitsbewegung 64 eine Stellkraft auf lediglich das erste Steuerelement 23 ausübt und bei Ausführung der zweiten Arbeitsbewegung 65 eine Stellkraft ausschließlich auf das zweite Steuerelement 24 ausübt. Vom jeweils anderen Steuerelement 24, 23 ist der Mitnehmer 45 hierbei antriebsmäßig entkoppelt. Wenn eines der Steuerelemente 23, 24 in eine Offenstellung bewegt wird, verharrt demzufolge das jeweils andere Steuerelement 24, 23 in der Schließstellung.

Diese sich selbsttätig entkoppelnde Antriebsverbindung wird insbesondere dadurch realisiert, dass der Mitnehmer 45 nur durch losen Kontakt mit den beiden Steuerelementen 23, 24 zusammenwirkt, und zwar derart, dass er bei jeweils nur einer seiner möglichen Antriebsbewegungen 64, 65 eine Stellkraft auf die Steuerelemente 23, 24 ausüben kann. Die Ventile 1 des Ausführungsbeispiels sind so ausgebildet, dass der Mitnehmer 48 ausschließlich mit einer drückenden Stellkraft auf jedes Steuerelement 23, 24 einwirken kann. Durch diese drückende Stellkraft wird je nach Aktivierungsrichtung entweder das erste Steuerelement 23 oder das zweite Steuerelement 24 aktiv in der Öffnungsrichtung 41 beaufschlagt.

Wird die der Spuleneinheit 44a auferlegte Stromstärke reduziert oder die Bestromung unterbrochen, kehrt das zuvor ausgelenkte Steuerelement 23, 24 aufgrund der rückstellenden Kraft der Federmittel 32 wieder in die Schließstellung zurück.

Zur Übertragung der drückenden Stellkraft ist an dem Mitnehmer 45 eine dem ersten Steuerelement 23 zugewandte erste Drückfläche 67 und eine dem zweiten Steuerelement 24 zugewandte zweite Drückfläche 68 angeordnet, wobei der ersten Drückfläche 67 eine am ersten Steuerelement 23 angeordnete erste Betätigungsfläche 72 und der zweiten Drückfläche 68 eine an dem zweiten Steuerelement 24 angeordnete zweite Betätigungsfläche 73 gegenüberliegt. Zwischen den jeweils zugewandten ersten und zweiten Drück- und Betätigungsflächen befindet sich bei Einnahme der Grundstellung des Mitnehmers 45 der schon erwähnte minimale Luftspalt 66.

Bedingt durch die Anordnung zwischen den beiden Steuerelementen 23, 24 befinden sich bei dem Ausführungsbeispiel der Figur 1 die beiden Drückflächen 67, 68 an einander entgegengesetzten Seiten des Mitnehmers 45 und weisen in einander entgegengesetzte Richtungen. Die erste Drückfläche 67 ist bevorzugt im Bereich der zweiten Antriebseinheit 44 angeordnet, die zweite Drückfläche 68 liegt zweckmäßigerweise zwischen dem die erste Drückfläche 67 aufweisenden Abschnitt des Mitnehmers 45 und dem Schwenklager 67.

Seitens des zweiten Steuerelementes 24 ist die zweite Betätigungsfläche 73 an dem ersten Wippenarm 20 und das Verschlussmittel 37 an dem zweiten Wippenarm 21 angeordnet.

Bei der ersten Arbeitsbewegung 64 beaufschlagt der Mitnehmer 45 die erste Betätigungsfläche 72 mit seiner ersten Drückfläche 67, wobei sich gleichzeitig die zweite Drückfläche 68 von der zweiten Betätigungsfläche 73 entfernt. Umgekehrte Verhältnisse ergeben sich bei Ausführung der zweiten Arbeitsbewegung 65. Aufgrund der Wippencharakteristik des zweiten Steuerelementes 24 bewegen sich bei dessen Auslenkung die zweite Betätigungsfläche 73 und das Verschlussmittel 37 bezogen auf die Achsrichtung der Querachse 4b in einander entgegengesetzten Richtungen. Diese Bewegungsumkehr macht es möglich, die beiden Ventilsitze 15, 16 mit gleicher Orientierung anzuordnen.

Bei den Ausführungsbeispielen der Figuren 2 bis 5 befindet sich die erste Drückfläche 67 an dem ersten Armabschnitt 62 und die zweite Drückfläche 68 an dem zweiten Armabschnitt 63 des Mitnehmerarmes 48. Sie befinden sich an ein und derselben Längsseite des Mitnehmers 45 und weisen in die gleiche Richtung wie die Ventilsitze 15, 16. Je nach Schwenkrichtung des Mitnehmers 45 drückt hier der jeweils eine Armabschnitt 62 oder 63 auf das eine Steuerelement 23, 24, während sich der andere Armabschnitt von dem ihm zugeordneten Steuerelement entfernt.

Wenn der Mitnehmer 45 wippenartig ausgebildet ist, ist es von Vorteil, wenn sich sein Schwenklager 47 bezogen auf die Achsrichtung der Hauptachse 4a auf zumindest im Wesentlichen gleicher Höhe mit den Schwenklagern 17 für die Steuerelemente 23, 24 befindet.

Was den Aufbau der Antriebseinrichtung 42 anbelangt, enthält die Permanentmagneteinheit 43a zweckmäßigerweise einen Permanentmagnetring 49, dessen Längsachse in der oder parallel zu der Bezugsebene verläuft und der an seinen beiden Stirnseiten von einer vorderen (52) und einer rückseitigen (53) ferritischen Polscheibe flankiert ist. Die rückseitige Polscheibe 53 kann zur Befestigung genutzt werden und trägt einen zentralen Eisenkern 54, der mit Radialabstand koaxial in den Permanentmagnetring 49 hineinragt.

Die der Spuleneinheit 44a zugewandte vordere Polscheibe 52 ist ringförmig ausgebildet und verfügt über eine zentrale Durchbrechung, in die der Eisenkern 54 mit radialem Abstand hineinragt. Somit ist zwischen einerseits dem Eisenkern 54 und andererseits dem Permanentmagnetring 49 und der vorderen Polscheibe 52 ein Ringspalt 55 definiert, der zur Spuleneinheit 44 hin offen ist.

Die als Baueinheit mit dem Mitnehmerarm 48 ausgebildete Spuleneinheit 44a enthält eine mit einer geeigneten Anzahl von Wicklungen versehene Spule 55, die im Wesentlichen koaxial zu der Permanentmagneteinheit 43a angeordnet ist. Ihre rückwärtige Stirnseite ist dem Mitnehmerarm 48 zugewandt, ihre freie vordere Stirnseite weist zu der Permanentmagneteinheit 43a. Mit dieser freien vorderen Stirnseite voraus taucht die Spule 56 in den vorgenannten Ringspalt 55 ein. Die Eintauchtiefe hängt von der Intensität und Richtung der Bestromung der Spule 56 ab.

Bei dem Ventil der Figur 1 sind der Mitnehmer 45 und das erste Steuerelement 23 insbesondere nach Art eines einarmigen Hebels ausgebildet, während das wippenartige zweite Steuerelement 24 nach Art eines zweiarmigen Hebels ausgebildet ist. Bei den anderen Ausführungsbeispielen sind beide Steuerelemente 23, 24 jeweils in Form eines einarmigen Hebels ausgebildet, während der wippenartige Mitnehmer 45 als zweiarmiger Hebel gestaltet ist.

Kooperiert der Mitnehmer 45 wie bei dem Ventil der Figur 5 mit zwei Antriebseinrichtungen 42, werden selbige zweckmäßigerweise stets gleichzeitig gegensinnig betrieben, so dass der eine Armabschnitt 62 oder 63 drückend und gleichzeitig der andere Armabschnitt 63, 62 ziehend beaufschlagt wird und sich somit eine Verdopplung des auf den Mitnehmer 45 einwirkenden Drehmomentes erzielen lässt.

## Patentansprüche

1. Ventil, mit zwei in einem Ventilgehäuse (2) relativ zu diesem und relativ zueinander zwischen jeweils einer Schließstellung und mindestens einer Offenstellung bewegbar angeordneten ersten und zweiten Steuerelementen (23, 24), von denen das erste Steuerelement (23) mit einem einem ersten Ventilsitz (15) zugeordneten ersten Verschlussmittel (36) und das zweite Steuerelement (24) mit einem einem zweiten Ventilsitz (16) zugeordneten zweiten Verschlussmittel (37) bewegungsgekoppelt ist, wobei jedes Verschlussmittel (36, 37) in der Schließstellung des mit ihm bewegungsgekoppelten Steuerelementes (23, 24) dichtend am zugeordneten Ventilsitz (15, 16) anliegt und in der Offenstellung davon abgehoben ist, und mit elektrisch aktivierbaren Antriebsmitteln zum Betätigen der Steuerelemente (23, 24), wobei die Antriebsmittel von mindestens einer die wahlweise Betätigung jedes Steuerelementes (23, 24) ermöglichenden elektrodynamischen Antriebseinrichtung (42) gebildet sind, die zwei miteinander kooperierende und relativ zueinander bewegliche erste und zweite Antriebseinheiten (43, 44) in Form einer Permanentmagneteinheit (43a) und einer elektrisch bestrombaren Spuleneinheit (44a) enthält, wobei die erste Antriebseinheit (43) ortsfest bezüglich dem Ventilgehäuse (2) angeordnet und die zweite Antriebseinheit (44) Bestandteil eines relativ zum Ventilgehäuse (2) beweglichen Mitnehmers (45) ist, **dadurch gekennzeichnet, dass** der Mitnehmer (45) ausgehend von einer bei unbestromter Spuleneinheit (44a) vorliegenden Grundstellung je nach gewählter Richtung der Bestromung der Spuleneinheit (44a) zu wahlweise einer von zwei einander entgegengesetzt orientierten ersten und zweiten Arbeitsbewegungen (64, 65) antreibbar ist, bei deren Ausführung er bei gleichzeitiger antriebsmäßiger Entkopplung vom jeweils anderen Steuerelement (24, 23) auf entweder das erste (23) oder das zweite Steuerelement (24) einwirkt, um dessen Schaltstellung zu verändern.

2. Ventil nach Anspruch 1, **dadurch gekennzeichnet, dass** die beiden Antriebseinheiten (43, 44) derart ausgebildet sind, dass sie in Abhängigkeit von ihrer Relativposition mehr oder weniger weit ineinander eintauchen, wobei die elektrodynamische Antriebseinrichtung (42) zweckmäßigerweise nach dem Tauchspulenprinzip aufgebaut ist, wobei die Spuleneinheit (44a) in Abhängigkeit von der Relativposition der beiden Antriebseinheiten (43a, 44a) mehr oder weniger weit in die Permanentmagneteinheit (43a) eintaucht.

3. Ventil nach Anspruch 2, **dadurch gekennzeichnet, dass** die Permanentmagneteinheit (43a) einen stirnseitig von zwei ferritischen Polscheiben (52, 53) flankierten Permanentmagnetring (49) aufweist, wobei von der einen Polscheibe (53) ein Eisenkern (54) koaxial in den Permanentmagnetring (49) hinein vorsteht und der Eisenkern (54) zusammen mit dem Permanentmagnetring (49) und der mit einer zentralen Durchbrechung versehenen anderen Polscheibe (52) einen Ringspalt (55) begrenzt, in den eine Spule (56) der Spuleneinheit (44a) koaxial eintaucht.

4. Ventil nach einem der Ansprüche 1 bis 3, **dadurch gekennzeichnet, dass** eine Steuereinrichtung (58) zur Vorgabe der Bestromungsrichtung und zweckmäßigerweise auch zur variablen Vorgabe der Bestromungsintensität der Spuleneinheit (44a) vorhanden ist.

5. Ventil nach einem der Ansprüche 1 bis 4, **dadurch gekennzeichnet, dass** die Permanentmagneteinheit (43a) die ortsfest bezüglich dem Ventilgehäuse (2) angeordnete erste Antriebseinheit (43) ist.

6. Ventil nach einen der Ansprüche 1 bis 5, **dadurch gekennzeichnet, dass** beide Steuerelemente (23, 24) ihre Schließstellung einnehmen, wenn sich der Mitnehmer (45) in der Grundstellung befindet, derart, dass der Mitnehmer (45) bei Ausführung der einen oder anderen Arbeitsbewegung (64, 65) das von ihm angetriebene Steuerelement (23, 24) aus der Schließstellung in eine Offenstellung bewegt, wobei das andere Steuerelement (24, 23) aufgrund seiner Entkopplung von dem Mitnehmer (45) in der Schließstellung verharrt.

7. Ventil nach einem der Ansprüche 1 bis 6, **dadurch gekennzeichnet, dass** beide Steuerelemente (23, 24) durch Federmittel (32) in nachgiebiger Weise in die Schließstellung vorgespannt sind.

8. Ventil nach einem der Ansprüche 1 bis 7, **dadurch gekennzeichnet, dass** die beiden Ventilsitze (15, 16) jeweils die Kanalmündung (12, 13) eines in eine Ventilkammer (3) einmündenden Ventilkanals (6,7) umrahmen, wobei ein von den Verschlussmitteln (36, 37) nicht gesteuerter dritter Ventilkanal (8) ebenfalls in die Ventilkammer (3) einmündet.

9. Ventil nach einem der Ansprüche 1 bis 8, **dadurch gekennzeichnet, dass** die Verschlussmittel (36, 37) am jeweils zugeordneten Steuerelement (23, 24) unmittelbar angeordnet sind.

10. Ventil nach einem der Ansprüche 1 bis 9, **dadurch gekennzeichnet, dass** der Mitnehmer (45) derart lose mit den beiden Steuerelementen (23, 24) antriebsmäßig gekoppelt oder koppelbar ist, dass er auf jedes Steuerelement (23, 24) bei jeweils nur einer seiner beiden möglichen Arbeitsbewegungen (64, 65) eine Stellkraft ausüben kann, wobei der Mitnehmer (45) zur Betätigung der Steuerelemente (23, 24) zweckmäßigerweise ausschließlich mit einer drückenden Stellkraft auf jedes Steuerelement (23, 24) einwirken kann.

11. Ventil nach Anspruch 10, **dadurch gekennzeichnet, dass** an dem Mitnehmer eine erste Drückfläche (67) und eine zweite Drückfläche (68) angeordnet ist, wobei der ersten Drückfläche (67) eine am ersten Steuerelement (23) angeordnete erste Betätigungsfläche (72) und der zweiten Drückfläche (68) eine am zweiten Steuerelement (24) angeordnete zweite Betätigungsfläche (73) gegenüberliegt und wobei der Mitnehmer (45) bei der ersten Arbeitsbewegung (64) mit der ersten Drückfläche (67) auf die erste Betätigungsfläche (72) und bei der zweiten Arbeitsbewegung (65) mit der zweiten Drückfläche (68) auf die zweite Betätigungsfläche (73) jeweils drückend einwirkt, um das zugeordnete Steuerelement (23, 24) umzuschalten, wobei in der Grundstellung des Mitnehmers (45) zwischen den sich gegenüberliegenden Drückflächen (67, 68) und Betätigungsflächen (72, 73) zweckmäßigerweise mindestens ein Luftspalt (66) vorliegt.

12. Ventil nach Anspruch 11, **dadurch gekennzeichnet, dass** die beiden Drückflächen (67, 68) an dem Mitnehmer (45) in einander entgegengesetzte Richtungen weisend angeordnet sind, insbesondere an einander entgegengesetzten Seiten des Mitnehmers (45).

13. Ventil nach Anspruch 12, **dadurch gekennzeichnet, dass** die beiden Drückflächen (67, 68) an dem Mitnehmer (45) in die gleiche Richtung weisend angeordnet sind, insbesondere an ein und derselben Seite des Mitnehmers (45).

14. Ventil nach einem der Ansprüche 1 bis 13, **dadurch gekennzeichnet, dass** der Mitnehmer (45) zur Ausführung seiner Arbeitsbewegungen (64, 65) relativ zum Ventilgehäuse (2) verschwenkbar ist, wobei er zweckmäßigerweise wippenartig ausgebildet ist.

15. Ventil nach einem der Ansprüche 1 bis 14, **dadurch gekennzeichnet, dass** mindestens eines der Steuerelemente (23, 24) und zweckmäßigerweise jedes Steuerelement (23, 24) bezüglich dem Ventilgehäuse (2) verschwenkbar ist, wobei zweckmäßigerweise mindestens eines der Steuerelemente (23, 24) wippenartig ausgebildet ist und zwei Wippenarme (20, 21) aufweist, von denen der eine Wippenarm (20) mit dem Mitnehmer (45) kooperiert und der andere Wippenarm (21) das Verschlussmittel (37) aufweist.

16. Ventil nach einem der Ansprüche 1 bis 15, **dadurch gekennzeichnet, dass** dem Mitnehmer (45) zwei Antriebseinrichtungen (42) zugeordnet sind, deren zweite Antriebseinheiten (44) zweckmäßigerweise an jeweils einem von zwei Armen (62, 63) des Mitnehmers (45) angeordnet sind, welche sich diesseits und jenseits eines dem Mitnehmer (45) zugeordneten Schwenklagers (47) erstrecken.

17. Ventil nach einem der Ansprüche 1 bis 16, **dadurch gekennzeichnet, dass** die beiden Ventilsitze (15, 16) untereinander identisch ausgerichtet sind.

## Claims

1. Valve comprising two first and second control elements (23, 24), which are located in a valve housing (2) while being movable relative thereto and relative to each other between a closed position and at least one open position, wherein the first control element (23) is motion-coupled to a first closing means (36) assigned to a first valve seat (15) and the second control element (24) is motion-coupled to a second closing means (37) assigned to a second valve seat (16), wherein each closing means (36, 37) bears against the associated valve seat (15, 16) in a sealing manner in the closed position of the motion-coupled control element (23, 24) and is lifted off therefrom in the open position, and further comprising electrically actuatable drive means for actuating the control elements (23, 24), wherein the drive means are represented by at least one electrodynamic drive device (42), which allows the selective actuation of each control element (23, 24) and contains two mutually cooperating first and second drive units (43, 44) in the form of a permanent magnet unit (43a) and an electrically energisable coil unit (44a), which drive units are movable relative to each other, wherein the first drive unit (43) is arranged to be stationary relative to the valve housing (2) and the second drive unit (44) is a part of a driver (45) which is movable relative to the valve housing (2), **characterised in that** the driver (45) can, starting from a basic position present if the coil unit (44a) is not energised, selectively be driven to perform one of two oppositely oriented first and second working movements (64, 65) depending on the selected energisation direction of the coil unit (44a), in the performance of which movements it acts either on the first (23) or on the second control element (24) to change its switching position, while at the same time being decoupled from the respective other control element (23, 24).

2. Valve according to claim 1, **characterised in that** the two drive units (43, 44) are designed such that they dip into each other to a greater or lesser degree depending on their relative position, wherein the electrodynamic drive device (42) is expediently designed in accordance with the moving coil principle, wherein the coil unit (44a) dips into the permanent magnet unit (43a) to a greater or lesser degree depending on the relative position of the two drive units (43a, 44a).

3. Valve according to claim 2, **characterised in that** the permanent magnet unit (43a) has a permanent magnet ring (49), which is flanked at the end faces by two ferritic pole pieces (52, 53), wherein an iron core (54) projects from the one pole piece (53) coaxially into the permanent magnet ring (49) and the iron core (54), together with the permanent magnet ring (49) and the other pole piece (52) provided with a central opening, bounds an annular gap (55), into which a coil (56) of the coil unit (44a) dips coaxially.

4. Valve according to any of claims 1 to 3, **characterised in that** a control device (58) is provided for presetting the energisation direction and expediently also for the variable presetting of the energisation intensity of the coil unit (44a).

5. Valve according to any of claims 1 to 4, **characterised in that** the permanent magnet unit (43a) is the drive unit (43) which is arranged to be stationary relative to the valve housing (2).

6. Valve according to any of claims 1 to 5, **characterised in that** both control elements (23, 24) adopt their closed position if the driver (45) is in its base position in such a way that the driver (45), when performing one or the other working movement (64, 65), moves the driven control element (23, 24) from the closed position into an open position, the other control element (24), being decoupled from the driver (45), remaining in the closed position.

7. Valve according to any of claims 1 to 6, **characterised in that** both control elements (23, 24) are resiliently preloaded towards the closed position by spring means (32).

8. Valve according to any of claims 1 to 7, **characterised in that** each of the two valve seats (15, 16) frames the passage orifice (12, 13) of a valve passage (6, 7) terminating into a valve chamber (3), a third valve passage (8) not controlled by the closing means (36, 37) likewise terminating into the valve chamber (3)

9. Valve according to any of claims 1 to 8, **characterised in that** each of the closing means (36, 37) is directly located on the associated control element (23, 24).

10. Valve according to any of claims 1 to 9, **characterised in that** the driver (45) is or can be loosely drive-coupled to both control elements (23, 24) in such a way that it can apply an actuating force to each control element (23, 24) during only one of its two possible working movements (64, 65), wherein the driver (45), in order to actuate the control elements (23, 24), can expediently act on each control element (23, 24) exclusively with a pressing actuating force.

11. Valve according to claim 10, **characterised in that** a first pressing face (67) and a second pressing face (68) are provided on the driver, wherein a first actuating face (72) located on the first control element (23) is arranged opposite the first pressing face (67) and a second actuating face (73) located on the second control element (24) is arranged opposite the second pressing face (68), and wherein the driver (45) acts in a pressing manner on the first actuating face (72) with the first pressing face (67) in the first working movement (64) and on the second actuating face (73) with the second pressing face (68) in the second working movement (65), in order to switch over the associated control element (23, 24), with at least one air gap (66) being expediently present between opposing pressing faces (67, 68) and actuating faces (72, 73) in the base position of the driver (45).

12. Valve according to claim 11, **characterised in that** the two pressing faces (67, 68) are arranged on the driver (45) so as to point in opposite directions, in particular on opposite sides of the driver (45).

13. Valve according to claim 12, **characterised in that** the two pressing faces (67, 68) are arranged on the driver (45) so as to point in the same direction, in particular on one and the same side of the driver (45).

14. Valve according to any of claims 1 to 13, **characterised in that** the driver (45) is pivotable relative to the valve housing (2) for performing its working movements (64, 65), being expediently designed in the manner of a rocker.

15. Valve according to any of claims 1 to 14, **characterised in that** at least one of the control elements (23, 24) and expediently each control element (23, 24) is pivotable relative to the valve housing (2), wherein expediently at least one of the control elements (23, 24) is designed in the manner of a rocker and has two rocker arms (20, 21), of which the one rocker arm (20) cooperates with the driver (45) and the other rocker arm (21) is provided with the closing means (37).

16. Valve according to any of claims 1 to 15, **characterised in that** the driver (45) is assigned two drive devices (42), each of the second drive units (44) of which is expediently located on one of two arms (62, 63) of the driver (45), which extend on the near side and on the far side of a pivot bearing (47) assigned to the driver (45).

17. Valve according to any of claims 1 to 16, **characterised in that** the two valve seats (15, 16) are oriented identically relative to each other.

## Revendications

1. Soupape, avec deux premier et second éléments de commande (23, 24) disposés de manière mobile dans un boîtier de soupape (2) par rapport à celui-ci et relativement l'un par rapport à l'autre entre respectivement une position de fermeture et au moins une position ouverte, dont le premier élément de commande (23) est couplé en mouvement avec un premier moyen de fermeture (36) associé à un premier siège de soupape (15) et le second élément de commande (24) avec un second moyen de fermeture (37) associé à un second siège de soupape (16), dans laquelle chaque moyen de fermeture (36, 37) repose dans la position de fermeture de l'élément de commande (23, 24) couplé en mouvement avec celui-ci de manière étanche contre le siège de soupape (15, 16) associé et est levé dans la position ouverte de celui-ci, et avec des moyens d'entraînement activables électriquement pour l'actionnement des éléments de commande (23, 24), dans laquelle les moyens d'entraînement sont formés par au moins un dispositif d'entraînement (42) électrodynamique permettant l'actionnement au choix de chaque élément de commande (23, 24), qui contient deux première et seconde unités d'entraînement (43, 44) mobiles l'une par rapport à l'autre et coopérant l'une avec l'autre sous la forme d'une unité à aimants permanents (43a) et une unité de bobine (44a) pouvant être alimentée électriquement, dans laquelle la première unité d'entraînement (43) est disposée fixement par rapport au boîtier de soupape (2) et la seconde unité d'entraînement (44) fait partie d'un élément d'entraînement (45) mobile par rapport au boîtier de soupape (2), **caractérisée en ce que** l'élément d'entraînement (45) peut être entraîné à partir d'une position de base présente en cas d'unité de bobine (44a) non alimentée électriquement selon la direction choisie de l'alimentation électrique de l'unité de bobine (44a) vers au choix un de deux premier et second mouvements de travail (64, 65) orientés à l'opposé l'un de l'autre, lors de la réalisation desquels il agit en cas de découplage d'entraînement simultané de l'autre élément de commande (24, 23) respectif sur le premier (23) ou le second élément de commande (24) afin de modifier sa position de commutation.

2. Soupape selon la revendication 1, **caractérisée en ce que** les deux unités d'entraînement (43, 44) sont réalisées de telle manière qu'elles s'enfoncent en fonction de leur position relative plus ou moins largement l'une dans l'autre, dans laquelle le dispositif d'entraînement (42) électrodynamique est constitué de manière appropriée selon le principe de la bobine mobile, dans laquelle l'unité de bobine (44a) s'enfonce en fonction de la position relative des deux unités d'entraînement (43a, 44a) plus ou moins largement dans l'unité à aimants permanents (43a).

3. Soupape selon la revendication 2, **caractérisée en ce que** l'unité à aimants permanents (43a) présente un anneau à aimants permanents (49) flanqué côté avant par deux disques polaires (52, 53) ferritiques, dans laquelle un noyau de fer (54) dépasse de l'un disque polaire (53) coaxialement dans l'anneau à aimants permanents (49) et le noyau de fer (54) conjointement avec l'anneau à aimants permanents (49) et l'autre disque polaire (52) pourvu d'une interruption centrale délimite une fente annulaire (55), dans laquelle une bobine (56) de l'unité de bobine (44a) s'enfonce coaxialement.

4. Soupape selon l'une quelconque des revendications 1 à 3, **caractérisée en ce qu'**un dispositif de commande (58) est présent pour la prescription du sens d'alimentation électrique et de manière appropriée aussi pour la prescription variable de l'intensité d'alimentation électrique de l'unité de bobine (44a).

5. Soupape selon l'une quelconque des revendications 1 à 4, **caractérisée en ce que** l'unité à aimants permanents (43a) est la première unité d'entraînement (43) disposée fixement par rapport au boîtier de soupape (2).

6. Soupape selon l'une quelconque des revendications 1 à 5, **caractérisée en ce que** les deux éléments de commande (23, 24) occupent leur position de fermeture lorsque l'élément d'entraînement (45) se trouve dans la position de base de telle manière que l'élément d'entraînement (45) déplace lors de la réalisation de l'un ou l'autre mouvement de travail (64, 65) l'élément de commande (23, 24) entraîné par celui-ci de la position de fermeture à une position ouverte, dans laquelle l'autre élément de commande (24, 23) demeure en raison de son découplage de l'élément d'entraînement (45) dans la position de fermeture.

7. Soupape selon l'une quelconque des revendications 1 à 6, **caractérisée en ce que** les deux éléments de commande (23, 24) sont précontraints par des moyens de ressort (32) de manière flexible dans la position de fermeture.

8. Soupape selon l'une quelconque des revendications 1 à 7, **caractérisée en ce que** les deux sièges de soupape (15, 16) encadrent respectivement l'embouchure de canal (12, 13) d'un canal de soupape (6, 7) débouchant dans une chambre de soupape (3), dans laquelle un troisième canal de soupape (8) non commandé par les moyens de fermeture (36, 37) débouche aussi dans la chambre de soupape (3).

9. Soupape selon l'une quelconque des revendications 1 à 8, **caractérisée en ce que** les moyens de fermeture (36, 37) sont disposés directement sur l'élément de commande (23, 24) associé respectivement.

10. Soupape selon l'une quelconque des revendications 1 à 9, **caractérisée en ce que** l'élément d'entraînement (45) est ou peut être couplé en entraînement de manière lâche aux deux éléments de commande (23, 24) de telle manière qu'il puisse exercer sur chaque élément de commande (23, 24) en cas d'un seul de ses deux mouvements de travail possibles (64, 65) respectivement une force de réglage, dans laquelle l'élément d'entraînement (45) peut agir pour l'actionnement des éléments de commande (23, 24) de manière appropriée exclusivement avec une force de réglage par pression sur chaque élément de commande (23, 24).

11. Soupape selon la revendication 10, **caractérisée en ce que** sur l'élément d'entraînement une première surface de pression (67) et une seconde surface de pression (68) sont disposées, dans laquelle à la première surface de pression (67) est opposée une première surface d'actionnement (72) disposée sur le premier élément de commande (23) et à la seconde surface de pression (68) est opposée une seconde surface d'actionnement (73) disposée sur le second élément de commande (24) et dans laquelle l'élément d'entraînement (45) agit respectivement par pression lors du premier mouvement de travail (64) avec la première surface de pression (67) sur la première surface d'actionnement (72) et lors du second mouvement de travail (65) avec la seconde surface de pression (68) sur la seconde surface d'actionnement (73) afin de commuter l'élément de commande (23, 24) associé, dans laquelle dans la position de base de l'élément d'entraînement (45) entre les surfaces de pression (67, 68) et les surfaces d'actionnement (72, 73) opposées au moins une fente d'air (66) est présente de manière appropriée.

12. Soupape selon la revendication 11, **caractérisée en ce que** les deux surfaces de pression (67, 68) sont disposées tournées dans des sens opposés l'un de l'autre sur l'élément d'entraînement (45), en particulier sur des côtés opposés l'un à l'autre de l'élément d'entraînement (45).

13. Soupape selon la revendication 12, **caractérisée en ce que** les deux surfaces de pression (67, 68) sont disposées tournées dans le même sens sur l'élément d'entraînement (45), en particulier sur un même côté de l'élément d'entraînement (45).

14. Soupape selon l'une quelconque des revendications 1 à 13, **caractérisée en ce que** l'élément d'entraînement (45) est pivotant pour la réalisation de ses mouvements de travail (64, 65) par rapport au boîtier de soupape (2),
dans laquelle il est réalisé de manière appropriée à bascule.

15. Soupape selon l'une quelconque des revendications 1 à 14, **caractérisée en ce qu'**au moins un des éléments de commande (23, 24) et de manière appropriée chaque élément de commande (23, 24) est pivotant par rapport au boîtier de soupape (2), dans laquelle de manière appropriée au moins un des éléments de commande (23, 24) est réalisé à bascule et présente deux bras à bascule (20, 21), dont l'un bras à bascule (20) coopère avec l'élément d'entraînement (45) et l'autre bras à bascule (21) présente le moyen de fermeture (37).

16. Soupape selon l'une quelconque des revendications 1 à 15, **caractérisée en ce que** deux dispositifs d'entraînement (42) sont associés à l'élément d'entraînement (45), dont les secondes unités d'entraînement (44) sont disposées de manière appropriée sur respectivement un des deux bras (62, 63) de l'élément d'entraînement (45), qui s'étendent de part et d'autre d'un palier pivotant (47) associé à l'élément d'entraînement (45).

17. Soupape selon l'une quelconque des revendications 1 à 16, **caractérisée en ce que** les deux sièges de soupape (15, 16) sont orientés de manière identique entre eux.
